# EUROPEAN PATENT SPECIFICATION

(11) **EP 0 579 699 B1**
(45) Date of publication and mention of the grant of the patent: **16.12.1998**
(21) Application number: 92908749.2
(22) Date of filing: 10.04.1992
(51) Int. Cl.: H01H 13/70

(54) **ERGONOMIC KEYBOARD APPARATUS**
ERGONOMISCHE TASTATUR
APPAREIL A CLAVIER ERGONOMIQUE

(30) Priority: 10.04.1991 US 683980
(43) Date of publication of application: 26.01.1994
(73) Proprietor: KINESIS CORPORATION, Seattle, WA 98188-2146 (US)
(72) Inventor: HARGREAVES, William, R., Bellevue, WA 98006 (US); LUNDE, Shirley, A., Seattle, WA 98119 (US); FARRAND, William, P., Seattle, WA 98107 (US)
(74) Representative: Senior, Alan Murray
(86) International application number: PCT/US92/02957
(87) International publication number: WO 92/18996

(56) References cited:
- WO-A-89/06600
- DE-B- 1 279 693
- US-A- 3 929 216
- US-A- 4 081 068
- US-A- 4 244 659
- US-A- 4 579 470
- US-A- 4 974 183
- US-A- 5 017 030
- IBM TECHNICAL DISCLOSURE BULLETIN vol. 25, no. 7A , December 1982 , NEW YORK (US) pages 3300 - 3302 N.A. RHODES 'CHORD KEYBOARD'
- IBM Technical Disclosure Bulletin, Vol. 22, No. 3, 03 August 1979, D.L. CONWAY, "Contoured Keyboard", pages 1276-1277.

## Description

### Field of the Invention

The present invention relates generally to keyboards used for data input in conjunction with typewriters, computers and other like devices and, more particularly, an ergonomic keyboard for use with modern computers.

### Background of the Invention

The conventional typewriter and computer keyboard, hereinafter called the conventional qwerty keyboard, consists in diagrammatic representation of four horizontal rows of alphanumeric keys. The keys on one row are offset with respect to the keys on adjacent rows so that diagonal columns are formed. The name "QWERTY" comes from the letter layout of the left side second row. While certain differences exist for non-English language keyboards, these differences are essentially standardized and will be considered "qwerty" for this application.

The qwerty keyboard has long been recognized to have many disadvantages, including the following: the most commonly used letters are on the top row rather than on the home (middle) row, where the fingers normally rest; many of the most frequent stroking actions must be done by the weakest fingers (the little fingers); the left hand executes more strokes, both in terms of number and complexity, than the right hand, even though the majority of users are right-handed; the little finger of the right hand must select from at least 15 keys on the modern computer keyboard (IBM-AT compatible enhanced 101 keyboard), some of which are seldom used and thus require visual selection even by most touch typists; more complex stroking movements are required by the staggered key arrangement than would be required were the keys arranged in vertical columns. Furthermore, large numbers of specialized "function", "control", and editing keys have evolved for use with modern computer software. Such function and control keys are often used in combination with other keys, further increasing the difficulty in comfortably and accurately typing all the keys on a modern computer keyboard.

A major problem with the extensive and combined use of specialized computer keys is the awkward postures required for the arms, wrists, hands, and fingers. In recent years these awkward postures, combined with both static and dynamic exertion required to press and hold down keys, have been implicated as causative factors in an epidemic of painful and sometimes disabling occupational injuries. Thus, in addition to the disadvantages of traditional keyboards related to operator performance (speed, accuracy, endurance), these keyboards have also been shown to cause serious health problems. The health problems caused by excessive keyboard use are collectively called repetitive strain injuries. In combination with simple repetition of forceful motion, major factors which are believed to lead to health problems include pronation of the wrist, extension of the wrist, and ulnar deviation, among others. These injurious factors are caused or exaggerated by the use of traditional qwerty keyboards.

Many prior art keyboard arrangements have been proposed to eliminate the inadequacies of the qwerty keyboard. These prior art keyboard arrangements generally fall into three groups, referred to herein as the "letter layout alternatives" group, the "geometric alternatives" group, and the "chordic alternatives" group. However, as discussed in more detail below, these prior art keyboard arrangements have suffered from incomplete solutions and/or excessive training requirements, and have failed to combine relief from physically stressful postures and motions with productivity equal or exceeding the traditional keyboard and minimal training/retraining requirements. As a result, none of the prior art keyboard arrangements have gained widespread acceptance.

The letter layout alternatives group consists of keyboards in which the standard alphanumeric key set is employed, but the order of the keys has been varied while retaining the standard keyboard geometry. An example of a keyboard that falls into this group is provided in U.S. Patent No. 2,040,248, issued to Dvorak on May 12, 1936. The Dvorak patent describes a keyboard in which the layout of the alphanumeric keys is based on incidence of usage. Dvorak attempted to position the most heavily used keys *(e.g.,* "E") in the home row, and to minimize awkward letter combinations and long reaches. However, the keyboard of the Dvorak patent, as well as other keyboards falling into the letter layout alternatives group, suffers from the disadvantage that significant relearning is required before it can be used by a skilled touch typist accustomed to a qwerty keyboard. Furthermore, this layout does nothing to address the awkward postures and excessive force used by operators of keyboards with traditional key positioning and geometry.

The geometric alternatives group consists of keyboards in which both the standard alphanumeric key set and key layout are typically employed, but the geometry of the keyboard has been varied. As an example, U.S. Patent No. 1,652,464, issued December 13, 1927 to Tyberg, describes a planar qwerty keyboard which is split into right and left hand segments. The right and left hand segments are separated from one another and linked in a fixed position to a central segment containing function keys. As another example, U.S. Patent No. 4,244,659, issued January 13, 1981, to Malt describes a keyboard employing concave wells for right and left hand segments. The right and left hand segments of the keyboard described by Tyberg and Malt maintain the layout of the qwerty keyboard so that significant relearning of the keyboard is not required.

However, the keyboards described by Tyberg and Malt, as well as others falling into the geometric alternatives group, do not address the problems of extensive work and excessive key selection that is required by modern keyboards having function and auxiliary keys. Therefore, although providing a keyboard that reduces pronation of the wrist and ulnar deviation, prior art keyboards falling into the geometric alternatives group are not acceptable for use with modern keyboards having multiple function and auxiliary keys.

The chordic alternatives group consists of keyboards in which the alphanumeric key set and the key layout, as well as the keyboard geometry have been varied. Key combinations or "chords" are used to enter letters or numbers which are not represented by single keys. An example of keyboards falling into this group is U.S. Patent No. 4,897,649, issued to Stucki on January 30, 1990. The Stucki patent describes a keyboard in which multiple sets of two or more keys are mounted on a common base and arranged such as to be comprehended and operated by a single finger. The base is configured to provide separate areas for the right and left hands and an integral rest for the heels of the hands. The keyboard described by the Stucki patent is typical of keyboards falling into the chordic alternatives group which suffer from the same relearning disadvantages as keyboards falling into the alternative layout group. Furthermore, this class of keyboard requires an increased number of strokes per word, and thus productivity is inherently reduced.

Accordingly, there remains a need in the art for a keyboard that minimizes the strain and effort associated with undesirable postures and motions of the hands, wrists, and arms in typing the alphanumeric keys. Further, it is desirable to provide such a keyboard that simultaneously reduces typing inaccuracies and maintains or increases typing speed while minimizing the need for relearning. Still further, it is desirable to provide a keyboard that minimizes strain and effort of use resulting from the increased usage of specialized function keys on modern keyboards.

According to the present invention there is provided a keyboard for interfacing the fingers of an operator's hand with a data processing device, comprising:
first and second laterally spaced-apart alphanumeric key arrays having a plurality of alphanumeric key means for identifying alphanumeric characters to the data processing device, said key means including a home row having home keys where, in use, the operator's fingers normally rest, that define a reference position for the fingers of the operator; and
first and second laterally spaced-apart function key arrays having a plurality of function key means for identifying functions to be performed by the data processing device, said plurality of function key means being elevated in normal use, above the level of the reference position and tilted toward the operator with an angle that is greater than any angle with which the home keys are tilted towards the operator, thereby making said plurality of function key means more accessible to the operator than if they were not so angled.

The keyboard may also include an auxiliary orthogonal array of keys that are elevated with respect to the home row keys and angled thereto and are positioned for manipulation by the sides of the thumbs of the operator.

The keys of the auxiliary arrays may typically use keycaps which provide a terraced topography. One purpose of this terracing is to allow each key to be depressed comfortably with the side of the thumb without inadvertently depressing another key in the thumb array. A second purpose of the terracing is to provide tactile feedback of thumb location. Still further, the auxiliary array of keys may include at least first and second elongated keys positioned and aligned generally along a line defined by the position of the operator's relaxed thumb when the fingers are in the reference position. These first and second keys are constructed to move normal to the surface of the keyboard between first and second positions and to be depressed by the sides of the thumbs. Preferably, the first and second keys have different keycaps for tactile identification.
Figure 1 is a perspective view of the ergonomic keyboard of the present invention;
Figure 2 is a side view of the ergonomic keyboard illustrated in Figure 1;
Figure 3 is a partial sectional view taken along lines 3-3 of Figure 1;
Figure 4 is a plan view of the keyboard illustrated in Figure 1 showing the layout of the keys thereof;
Figure 5 is an alternative arrangement of keys, using a traditional diagonal array for alphanumeric keys (except that they are in separate left and right sections), but retaining the thumb keys, integral palm rest, plus elevated and tilted function keys; and
Figure 6 is an alternative key layout with additional keys compared to Figure 4.

### Detailed Description of the Preferred Embodiment

An improved ergonomic keyboard 100 for use with a modern computer (not shown), such as a standard personal computer, includes a plurality of alphanumeric keys 102, a plurality of function keys 104, and a plurality of auxiliary keys 106. It will be apparent to those skilled in the art that although the invention is described herein by reference to a keyboard 100 for use with a standard computer (not shown), the keyboard of the present invention could be used for data entry in combination with any data processing apparatus. As examples, the keyboard of the present invention could be used in combination with: control panels such as those found in aircraft, automobiles, and military apparatus; video games; electronic musical instruments; nonstandard keyboards; *etc*.

The alphanumeric keys 102 include all the ascii-character-generating keys of the standard four rows on a conventional computer keyboard, arranged in an array having the standard qwerty layout. As is known in the art, the alphanumeric keys 102 are provided for identifying and entering alphabet characters to the standard computer (not shown) with which the keyboard 100 is used.

The alphanumeric keys 102 are separated into first and second arrays 108 and 110 positioned for manipulation by the left and right hands of the operator, respectively. The area 160 intermediate the first and second arrays 108 and 110 is preferably constructed for storage. The storage provided in the area 160 may be used by the operator for accessories or other items.

The first and second arrays 108 and 110 are each arranged in an approximately orthogonal, concave array. However, while columns are well aligned, rows are somewhat curved to reflect the different length of fingers. Thus, the key columns for the ring finger and middle finger are generally more distal from the operator than the other columns. This offset is typically 1/4 to 2/3 of a keycap width. The precise attitude and position of a keyswitch base on a faceplate in which the keyswitch is to be mounted may be determined by the chart in Appendix A. The precise attitude and position of the keytop is determinable by the chart of Appendix A in combination with the keycap style. The presently preferred keycap style is that cylindrically sculpted style used in conventional PC keyboards, with the exception that the four home row keys use spherically sculpted keycaps for improved detection of the home row.

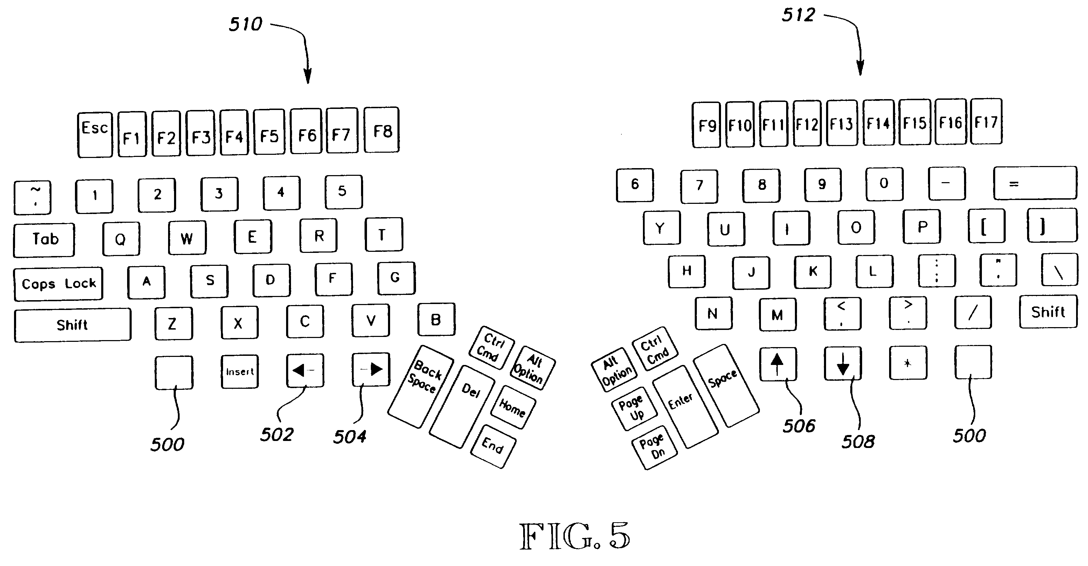

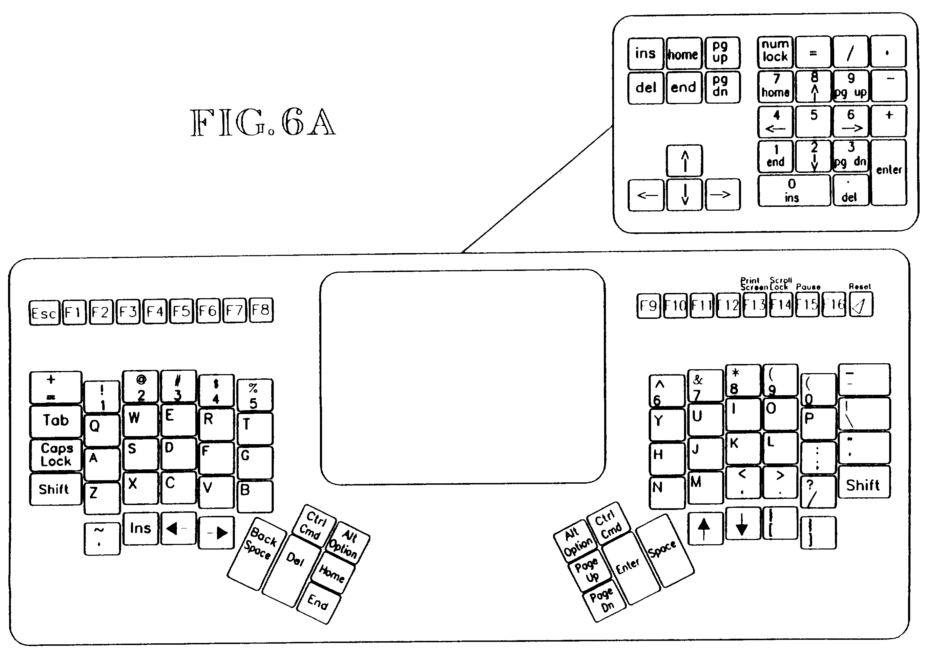

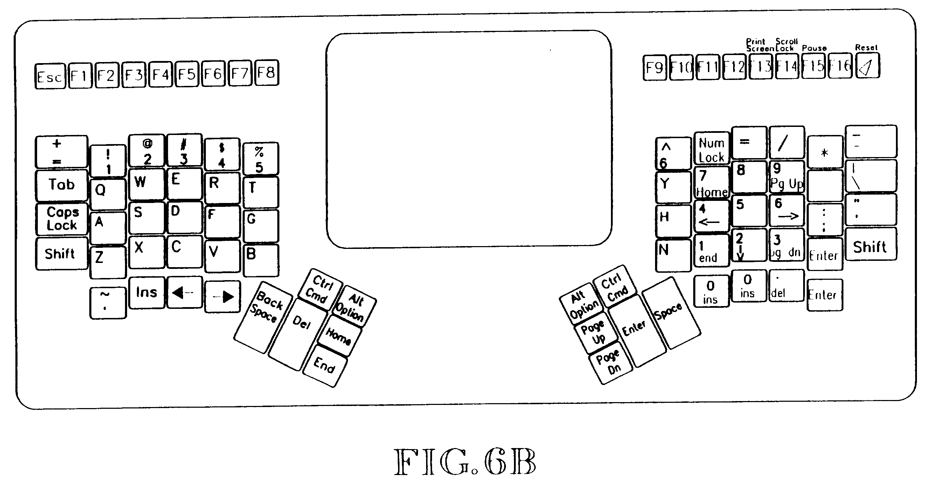

The first and second arrays 108 and 110 include first and second home rows 112 and 114, respectively, which each comprise four home keys that define a reference position for the fingers of the operator. Although the alphanumeric keys 102 are described herein as arranged in first and second concave arrays, it will be apparent to those skilled in the art that aspects of the present invention may be readily adapted for use with a keyboard wherein the alphanumeric keys are positioned in either flat or concave form. In addition, the present invention may be used with the traditional diagonal arrangement of alphanumeric keys (Figure 5) or with the non-standard orthogonal arrangement of alphanumeric keys (Figure 6). Furthermore, an optional, non-qwerty arrangement of keys is possible.

A further advantage of the keyboard of the subject invention is the addition of a fifth row 500, illustrated in Figure 5. In a presently preferred embodiment of the invention, the medial two keys 502 and 504, and 506 and 508 on the left side 510 and right side 512, respectively, are used for cursor positioning. Particularly, the inventors have determined that the medial keys 502 and 504 on the left side 510 are preferably used for left and right cursory movement as shown in Figure 5. In similar fashion, medial keys 506 and 508 on the right side 512 are preferably used for up and down cursory movement.

The plurality of function keys 104 are typically provided for activating special functions rather than generating printable characters and are commonly used in combination with the auxiliary keys 106 or with the alphanumeric keys 102. It is important for reliable usage that these be separated spatially from the alphanumeric keys. However, they must also be easily accessible and must be comfortable if held down. As is known in the art, the plurality of function keys 104 are labeled at least F1 through F10, and typically F1 through F12 or more, and include additionally Escape (Esc), Print Screen (Print Scrn, F13), Scroll Lock (F14), and Pause (F15). Different hardware systems *(i.e.,* Apple Macintosh vs IBM or compatible PC) and different software applications utilize different combinations of function keys, alphanumeric keys, and auxiliary keys. However, the most common combinations for an IBM compatible PC are either Ctrl or Alt used with a function key, F1-12. With an Apple Macintosh PC, the most common combinations are using the Option or Command keys with each other or with alpha keys or function keys.

The plurality of function keys 104 are arranged in first and second arrays 116 and 118 for manipulation by the left and right hands of the operator, respectively, wherein each array includes a plurality of keys. The keys of the first and second arrays 116 and 118 may be arranged in a linear fashion of one or more horizontal rows which are generally parallel to the reference position defined by the first and second home rows 112 and 114, respectively. It is preferred, however, to arrange the keys of the first and second arrays 116 and 118 in a curvilinear manner. In the preferred embodiment, the keys of the first and second arrays 116 and 118 are spaced closer (*e.g.*, 1/2 to 5/8 inch center to center) than the standard distance (3/4 inch) for alphanumeric keys. Also, as discussed above with respect to the first and second arrays 108 and 110, the first and second arrays 116 and 118 may be arranged for use with a keyboard having either a flat or concave alphanumeric array.

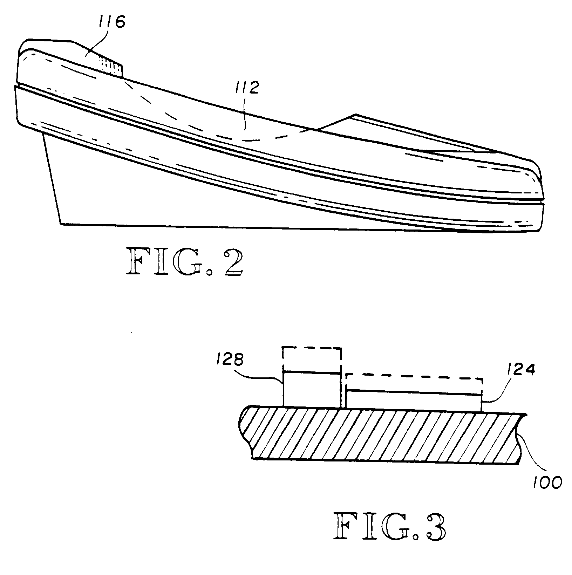

To improve the comfort, speed, and accuracy with which the function keys 104 may be used by the operator, the first and second arrays 116 and 118 are elevated above the level of the reference position defined by the top of the keycap in the first and second home rows 112 and 114, and are tilted toward the user. The degree of tilt of the function key arrays 116 and 118 relative to the work surface preferably ranges from 15 degrees up to 60 degrees. As also illustrated in Figure 2, the degree of elevation and tilt relative to the first and second home rows 112 and 114 is preferably 3-5 cm and at least 35 degrees, respectively. For most applications, the degree of tilt toward the user should allow the finger to depress the key with minimal finger motion by simply moving the extended finger toward the key. If the keys are tilted too much, the fingernail will hit the key, which may be uncomfortable for the user. If the keys are not tilted enough, additional downward motion toward the work surface is required, which necessitates extra effort and decreases speed and accuracy. It will be apparent, however, that the foregoing values for preferred degrees of elevation and tilt are provided as illustrative examples and that some variation may be provided without departing from the true scope of the present invention.

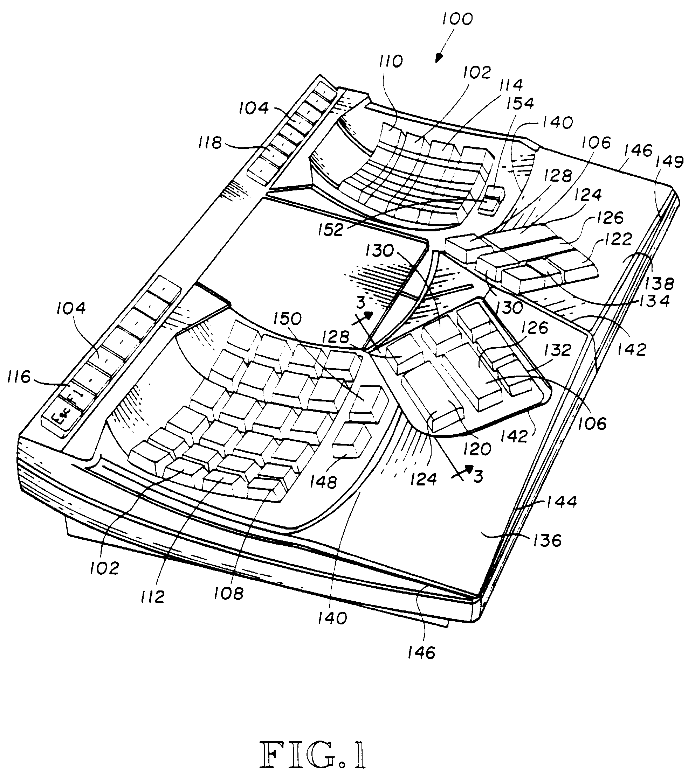

The auxiliary keys 106 shown in Figure 1 include a plurality of keys that are commonly employed with the conventional typewriter and/or computer key layout and that perform a function other than to enter an alphanumeric character. Examples of the functions performed by the auxiliary keys 106 include Space, Enter, Shift, Caps lock, Tab, Backspace, Control (Ctrl), and Alt, plus editing key (home, End, Page Up, Page Down, and Delete). The Apple Macintosh computer also uses the Command (Cmd) and Option keys. In the preferred embodiment, six keys are provided for each thumb as depicted in Figures 5 and 6. These six keys include Space, Enter and Backspace, plus the editing keys (Page Up, Page Down, Home, End, and Delete), as well as Ctrl and Alt, or Cmd and Option.

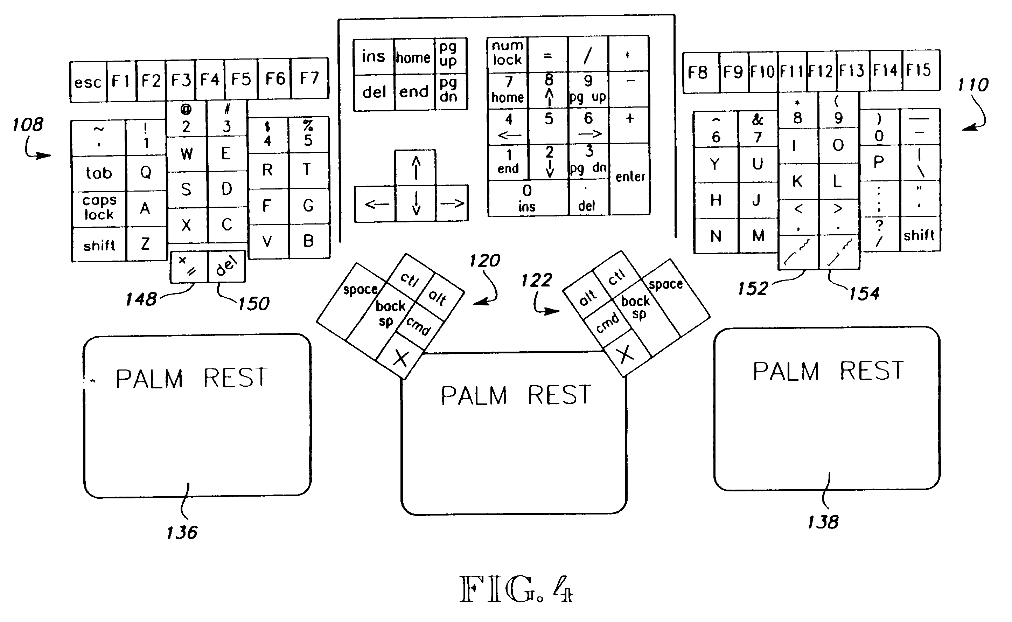

The auxiliary keys 106 are separated into first and second arrays 120 and 122 for manipulation by the left and right thumbs of the operator, respectively. It will be apparent to those skilled in the art that it may be desirable to provide keys in both the first and second arrays 120 and 122 for performing the same function, *e.g.*, Space, as shown in Figure 4. However, a preferred embodiment, shown in Figures 5 and 6, provides only one of each key for maximum versatility. The keys of the first and second arrays 120 and 122 are elevated with respect to the reference position defined by the keycap tops in the first and second home rows 112 and 114. Preferably the first and second arrays 120 and 122 are nearly level relative to the supporting desk surface, or slopes slightly up away from the operator (typically deviating approximately 10 degrees from level). With this attitude, the side of the relaxed thumb can comfortably depress the keys with minimal movement and effort. Previous usage of thumb keys in an orthogonal array (*e.g.*, Malt, U.S. 4,244,659) required pressing the thumb keys with the tip of the thumb, which is considerably less comfortable, requires greater skill to accomplish without looking at the key, and does not "self-adjust" to different hand sizes in the manner of the present invention.

The keys of the first and second arrays 120 and 122 are arranged in a generally orthogonal relationship, the axes of which are rotated with respect to the home row reference position. Preferably the angle at which the keys of the first and second arrays 120 and 122 are rotated with respect to the reference position is approximately 10-30 degrees, and most preferably approximately 20-25 degrees from straight ahead relative to the operator. This rotation and slope relative to the home row and work surface, respectively, is critical in fitting the thumb of most users comfortably along the length of elongated keycaps (*e.g.*, space, enter, backspace, delete, shown in Figures 5 and 6), and surprisingly accommodates operators with very small hands such as children (as young as approximately 7 years old) as well as adult operators with very large hands.

The first and second arrays 120 and 122 each include first and second elongated keys 124 and 126 which are positioned so that the thumbs of the operator are substantially parallel to their linear axis when the operator's hands are in the reference position. The positioning of the first and second elongated keys 124 and 126 make it easy for them to be depressed by the side of the thumb. An alternative assignment of these keys is possible, as shown in Figure 4. The preferred key assignments are shown in Figures 5 and 6, wherein the location of keys for performing functions known in the art are illustrated.

The first and second array 120 and 122 also include first and second square auxiliary keys 128 and 130 aligned with the linear axis of the first and second elongated keys 124 and 126, respectively. Each of the keys 124-130 is constructed to move between first and second positions generally normal to the surface of the keyboard 100.

With reference to Figure 3, the positions of the key tops for thumb-activated keys in array 106 are terraced to allow easier depression without pressing more than one key at a time inadvertently. In addition, the second elongated keys 126 are preferably steeply sloped along their short axis. The high side is adjacent to the first elongated key 124 and is higher than the top of said first elongated key. This allows the operator to more easily detect by touch if the thumb has strayed from the normal "home" position over the first elongated key. Square auxiliary keys 128 through 130 are shown to move between an open position (shown in outline) and a second actuated position. Similarly, the third square key 131 is shown to move between an open position (shown in outline) and an actuated position. The first square key 128 is positioned with its surface above the surface of the first elongated key 124 so that when the first elongated key 124 is in the open position (shown in outline), the first standard key may be depressed to the actuated position and its surface remain above the surface of the first elongated key. Positioned in this manner, the first, second, and third square auxiliary keys 128 through 130 may be easily manipulated by the thumb of the operator without inadvertent activation of the first or second elongated keys 124 and 126 or the other square auxiliary keys 131 or 132. Likewise, fourth square auxiliary key 131 is Preferably positioned with its surface above that of fifth square auxiliary key 132, so that the former may be depressed by the thumb without inadvertently depressing the latter.

In another embodiment, an orthogonal array of alphanumeric keys has alternative functions, termed "embedded 10-key," positioned for use by the fingers of either or both hands, as illustrated in Figure 6B. The alternative action for the alphanumeric keys may be triggered by pressing a dedicated key *(e.g.,* F16), but once invoked by F16, may be toggled on and off with a non-dedicated auxiliary key such as Caps Lock, Ctrl, or Alt.

In a further embodiment, the same key layout and orthogonal orientation of keys shown in Figure 6 could be designed in a flat plane to minimize the learning required for keys in a concave array. Typists with long fingernails, who are precluded from conveniently using a keyboard with concave alphanumeric arrays, could effectively use such an embodiment.

An additional alternative embodiment, shown in Figure 5, is a diagonal array of alphanumeric keys essentially identical to the traditional keyboard, except that right and left sides are separated by a space and thumb pads and function keys that are elevated and tilted toward the user are provided as in other embodiments. Learning is essentially eliminated for typing the alphanumeric keys in this embodiment, but significant comfort and performance benefits compared with the traditional keyboards are retained.

An important aspect of achieving comfortable fit of both small and large hands is the inclusion of first and second integral palm rests 136 and 138 for receiving the heel of the operators left and right hands, respectively. The first and second integral palm rests 136 and 138 can be fitted with an adhesive or clip-on pad for optimal comfort and for preventing large hands from sliding off. An especially suitable pad type is a self-adhesive, compliant gel covered with fabric, such as Elasto-Gel from Sowthwest Technologies, Inc. (Kansas City, MO). Users with small hands are able to rest their palm on the integral support during most typing activities, while users with medium to large hands are able to comfortably support their palms during virtually all typing activities as well as while resting.

Again referring to Figure 1, in the embodiment employing concave alphanumeric key arrays the first and second integral palm rests 136 and 138 are each elevated above the reference position defined by the keytops of the first and second home rows 112 and 114, respectively. Further, the first and second integral palm rests 136 and 138 slope downwardly from edges 140 and 142 to second and third edges 144 and 146, respectively. The lateral slope of the first and second integral palm rests enables the operator's hand to be supported at an angle that varies moderately from full pronation, *e.g.,* 10-30 degrees. The frontal slope (towards the operator) should be approximately 10 degrees (and not more than 15 degrees) to accommodate the natural slope of the relaxed palm from the base of the palm to the base of the fingers. It will be apparent to those skilled in the art that the palm rests are positioned to be in contact with the palms of the user while the user is manipulating the keys of the first arrays 108, 116, and 120, and the second arrays 110, 118, and 122. Further, the keys of the first and second arrays 108 and 110 are positioned below the first and second palm rests so that the fingers of the operator may naturally bend downward from the first and second integral palm rests 136 and 138 while manipulating the keys. The first and second arrays 120 and 122 are positioned above the first and second arrays 108 and 110 and rotated from the reference position so that the thumbs may be in their natural position substantially coplanar with the palm and can move naturally away from the palm to manipulate the keys of the first and second arrays 120 and 122.

The present invention combines proven features of alternative keyboards (split left and right alphanumeric segments, concave alphanumeric key layout geometry, integral palm rests), in a novel combination which provides features that provide surprisingly improved performance. This combination of design features minimizes the persistent, previously unsolved problems of conventional keyboards, without changing the familiar qwerty alphanumeric key layout. These improvements are accomplished by:
1. Reducing the strain and slow typing associated with using the computer function keys, which typically number at least 16, by elevating the function key row and tilting the keys towards the user relative to the plane of the alphanumeric keys. This positions the function keys closer to the home row and more visible to the operator. For split keyboards, using split function keys with reduced center-to-center spacing (preferably 5/8 inch) allows the use of at least 8, and typically 9, easily typed function keys above each alphanumeric segment. Using short travel switches for the function keys further facilitates convenient typing and allows for a more compact design than full travel switches. Most preferably, these switches are fabricated using conductive rubber or similar switch technology, so that the key cap is soft and compliant. In conjunction with such switches, an audible "click" should be provided (typically using an electronic resonator triggered when the switch makes contact) to maximize feedback to the operator.
2. Reducing the strain as well as inaccuracy and/or visual typing required by the large number of keys (typically at least 15) which have been addressed by the weak right little finger on a traditional computer keyboard. This is achieved by reducing the keys for either right or left hands to eight, by moving to the thumb position the most commonly-used keys (Enter/Return, Backspace, Ctrl, Alt, Cmd). In addition, a plurality of new key positions 148-154 have been added to the first and second arrays 108 and 110 as a fifth row. Typically at least two, and usually three or four new key positions (Figures 5 and 6) are located in row 5, as best illustrated in Figures 4-6.
3. Reducing the strain and slow typing associated with using the special "control keys", typically pressed in combination with letter keys or with function keys. This is achieved by moving the control keys from proximal-lateral to proximal-medial positions to be pressed typically by the thumbs. This change is especially advantageous when combined with the change in position and attitude of the function keys.
4. Reducing the strain and stretching required in using the standard qwerty alphanumeric key layout by creating an optimized concave well in which the alphanumeric keys are arrayed. The keys are placed in a generally orthogonal array of rows and columns to minimize awkward and tedious side-reaching with the fingers. However, certain adjacent columns are offset by 1/4 to 2/3 (preferably approximately 1/2) keycap width to better fit the lengths of human fingers. This combination of features, in conjunction with the other features described above; provides the surprising advantage that the typical operator may type the entire alphanumeric key set with hands resting on the palm/wrist support, thus reducing repetitive wrist motions and fatigue. When this concave, orthogonal array is used with conventional keycaps sloping at different angles in different rows (originally designed for use with conventional "flat" qwerty keyboards), the ease and accuracy of typing is further enhanced.
5. An embedded 10-key is especially useful to trained typists and 10-key users, because it matches the orthogonal layout which is traditionally employed in separate 10-key numeric pads.
6. An optimally positioned and padded palm rests, combined with appropriate positioning of the alphanumeric keys as described herein, allows most operators to type most or all alphanumeric keys while resting the palms. This has not been accomplished previously for keyboards using the traditional QWERTY layout. The use of a compliant gel pad is also important in providing comfortable support in a thin layer, so that the relationship of the hand to the keyboard is not significantly changed whether or not the pad is used.
7. The use of a right and left fifth row allows optional positioning of cursor movement keys. When more than two keys are provided on each side, seldom used keys normally typed by the little finger in other rows can be repositioned to the fifth row to increase accuracy and speed of typing both the relocated and neighboring keys.

Undesirable postures and motions of the hands, wrists, and arms are minimized or eliminated for most operators, including pronation of the wrist, extension of the wrists, and ulnar deviation. Surprisingly, this significant improvement in comfort, accuracy, and endurance is achieved in the best mode of the present invention without requiring the operator to relearn the relative positions of alphanumeric keys. Only minimal learning is required for efficient use of the medially-transferred auxiliary and control keys, and to compensate for the small positional differences of the alphanumeric keys caused by the change from diagonal to orthogonal key layout. While the primary objective of the present invention is improved comfort and endurance, plus reduced strain and stretching, without requiring substantial relearning, a further benefit is increased performance through increased accuracy and decreased visual typing of previously hard-to-reach keys.

### Appendix A.

The following array of numbers defines a set of lines, each of which ends at the position at which a mechanical keyswitch (e.g. type MX1A, from Cherry Electronics Corporation, Waukeegan, Illinois, U.S.A.) would contact a faceplate. These lines therefore represent the preferred positions and attitudes of the alphanumeric and thumb keys for the right and left sides of the present invention, as depicted in Figure 6. The first three numbers define one end of the line, and the second three numbers define the other end of the line. The point which is defined is located at the midpoint between the right and left alphanumeric key arrays.
- LINE: -3.68625, 6.67462, 2.04201, -5.626412, 4.89049, 4.921143, 8, 1, 1
- LINE: -53626412, 4.89049, 4.921143, -3.68082, 4.40724, 1.57183, 8, 1, 1
- LINE: -5.47696, 5.040864, 4.524379, -4.380041, 6.806573, 1.721562, 8, 1, 1
- LINE: -4.510779, 3.754514, 1.427841, -5.47696, 5.040664, 4.524379, 8, 1, 1
- LINE: -5.101057, 6.901806, 1.483988, -5.614666, 5.194831, 3.51583, 8, 1, 1
- LINE: -5.249757, 3.838916, 1.206808, -5.614666, 5.194831, 3.51583, 8, 1, 1
- LINE: -5.88672, 6.908103, 1.41973I, -6.306084, 5.091255, 4.240877, 8, 1, 1
- LINE: -6.03027, 3.851587, 1.106739, -6.306084, 5.091255, 4.240877, 8, 1, 1
- LINE: -7.54553, 6.77835, 1.45902, -7.73648, 5.132073, 3.684937, 8, 1, 1
- LINE: -7.65434, 4.53253, 0.97658, 7.73648, 5.132073, 3.684937, 8, 1, 1
- LINE: -3.79807, 3.05363, 1.92209, -3.78722, 3.0987, 1.72754, 8, 1, 1
- LINE: -3.12118, 2.76265, 1.90754, -3.11843, 2.80132, 1.71134, 8, 1, 1
- LINE: -2.53461, 2.19295, 1.77475, -2.53442, 2.23209, 1.57862, 8, 1, 1
- LINE: -2.24537, 2.85345, 1.88888, -2.26119, 2.88858, 1.69263, 8, 1, 1
- LINE: -1.97332, -3.51047, 2.01068, -1.98035, 3.55394, 1.81556, 8, 1, 1
- LINE: -2.6601, 3.76987, 2.09085, -2.66658, 3.80838, 1.89469, 8, 1, 1
- POINT: 0, 3.25, 2.05, 8, 1
- LINE: -3.601304, 5.185127, 1.597157, -5.626412, 4.89049, 4.921143, 8, 1, 1
- LINE: -5.626412, 4.89049, 4.921143, -3.603139, 5.961178, 1.75601, 8, 1, 1
- LINE: -4.391586, 4.517622, 1.849485, -5.47696, 5.040864, 4.524379, 8, 1, 1
- LINE: -5.47696, 5.040864, 4.524379, -4.328402, 5.30773, 1.240122, 8, 1, 1
- LINE: -4.324486, 6.084067, 1.400235, -5.47696, 5.040864, 4.524379, 8, 1, 1
- LINE: -5.614666, 5.194831, 3.51583, -5.143544, 4.596416, 0.9224, 8, 1, 1
- LINE: -5.080251, 5.408403, 0.8748596, -5.614666, 5.194831, 3.51583, 8, 1, 1
- LINE: -5.614666, 5.194831, 3.51583, -5.065645, 6.200934, 1.067919, 8, 1, 1
- LINE: -6.306084, 5.091255, 4.240877, -5.963534, 4.620381, 0.90972, 8, 1, 1
- LINE: -5.915799, 5.415294, 0.6974736, -6.306084, 5.091255, 4.240877, 8, 1, 1
- LINE: -6.306084, 5.091255, 4.240877, -5.889712, 6.192233, 1.07068, 8, 1, 1
- LINE: -7.73648, 5.132073, 3.684937, -7.606606, 5.316667, 0.9189916, 8, 1, 1
- LINE: -7.569335, 6.085933, 1.084243, -7.73648, 5.138073, 3.684937, 8, 1, 1
- LINE: -6.83356, 3.61895, 1.25776, -7.085053, 4.987385, 4.453756, 8, 1, 1
- LINE: -6.70894, 6.65975, 1.41863, -7.085053, 4.987385, 4.453756, 8, 1, 1
- LINE: -7.085053, 4.987385, 4.453756, -6.777004, 4.371971, 1.036648, 8, 1, 1
- LINE: -6.736145, 5.15635, 0.9896589, -7.085053, 4.987385, 4.453756, 8, 1, 1
- LINE: -7.085053, 4.987385, 4.453756, -6.713065, 5.93212, 1.119186, 8, 1, 1
- LINE: 7.085053, 4.987385, 4.453756, 6.713065, 5.93212, 1.119186, 8, 1, 1
- LINE: 6.736145, 5.15635, 0.9896589, 7.085053, 4.987385, 4.453756, 8, 1, 1
- LINE: 7.085053, 4.987385, 4.453756, 6.777004, 4.371971, 1.036648, 8, 1, 1
- LINE: 6.70894, 6.65975, 1.41863, 7.085053, 4.987385, 4.453756, 8, 1, 1
- LINE: 6.83356, 3.61895, 1.25776, 7.085053, 4.987385, 4.453756, 8, 1, 1
- LINE: 7.569335, 6.085933, 1.084243, 7.73648, 5.132073, 3.684937, 8, 1, 1
- LINE: 7.73648, 5.132073, 3.684937, 7.606606, 5.316667, 0.918996, 8, 1, 1
- LINE: 6.306084, 5.091255, 4.240877, 5.889712, 6.192233, 1.07068, 8, 1, 1
- LINE: 5.915799, 5.415294, 0.8974736, 6.306084, 5.091255, 4.240877, 8, 1, 1
- LINE: 6.306084, 5.091255, 4.240877, 5.963534, 4.620381, 0.90972, 8, 1, 1
- LINE: 5.614666, 5.194831, 3.51583, 5.065645, 6.200934, 1.067919, 8, 1, 1
- LINE: 5.080251, 5.408403, 0.8748596, 5.614666, 5.194831, 3.51583, 8, 1, 1
- LINE: 5.614666, 5.194831, 3.51583, 5.143544, 4.896416, 0.9224, 8, 1, 1
- LINE: 4.324486, 6.084067, 1.400235, 5.47696, 5.040864, 4.524379, 8, 1, 1
- LINE: 5.47696, 5.040864, 4.524379, 4.328402, 5.30773, 1.240122, 8, 1, 1
- LINE: 4.391585, 4.517622, 1.249485, 5.47696, 5.040864, 4.524379, 8, 1, 1
- LINE: 5.626412, 4.89049, 4.921143, 3.603139, 5.951178, 1.75601, 8, 1, 1
- LINE: 3.601304, 5.185127, 1.597157, 5.626412, 4.89049, 4.921143, 8, 1, 1
- LINE: 2.6601, 3.76987, 2.09085, 2.66656, 3.80838, 1.89469, 8, 1, 1
- LINE: 1.97332, 3.51047, 2.01068, 1.98035, 3.55394, 1.81556, 8, 1, 1
- LINE: 2.24537, 2.85345, 1.88888, 2.26119, 2.88858, 1.69263, 8, 1, 1
- LINE: 2.53461, 2.19295, 1.77475, 2.53442, 2.23209, 1.57862, 8, 1, 1
- LINE: 3.12118, 2.76265, 1.90754, 3.11843, 2.80132, 1.71134, 8, 1, 1
- LINE: 3.79807, 3.05363, 1.92209, 3.78722, 3.0987, 1.72754, 8, 1, 1
- LINE: 7.65434, 4.53253, 0.97658, 7.73648, 5.132073, 3.684937, 8, 1, 1
- LINE: 7.54553, 6.77835, 1.45902, 7.73648, 5.132073, 3.684937, 8, 1, 1
- LINE: 6.03027, 3.851587, 1.106739, 6.306084, 5.091255, 4.240877, 8, 1, 1
- LINE: 5.88672, 6.908103, 4.419731, 6.306084, 5.091255, 4.240877, 8, 1, 1
- LINE: 5.249757, 3.838946, 1.206208, 5.614666, 5.194831, 3.51583, 8, 1, 1
- LINE: 5.101057, 6.901806, 1.483988, 5.614666, 5.194831, 3.51583, 8, 1, 1
- LINE: 4.510779, 3.754514, 1.427841, 5.47696, 5.040864, 4.524379, 8, 1, 1
- LINE: 5.47696, 5.040864, 4.524379, 4.380041, 6.806573, 1.721562, 8, 1, 1
- LINE: 5.626412, 4.859049, 4.921143, 3.68082, 4.40724, 1.57183, 8, 1, 1
- LINE: 3.68625, 6.57462, 2.04201, 5.626412, 4.89049, 4.921143, 8, 1, 1

## Claims

1. A keyboard (100) for interfacing the fingers of an operator's hand with a data processing device,
comprising:
first and second laterally spaced-apart alphanumeric key arrays (108, 110) having a plurality of alphanumeric key means (102) for identifying alphanumeric characters to the data processing device, said key means (102) including a home row (112, 114) having home keys where, in use, the operator's fingers normally rest, that define a reference position for the fingers of the operator; and
first and second laterally spaced-apart function key arrays (116, 118) having a plurality of function key means (104) for identifying functions to be performed by the data processing device, said plurality of function key means (104) being elevated, in normal use, above the level of the reference position and tilted toward the operator with an angle that is greater than any angle with which the home keys are tilted towards the operator, thereby making said plurality of function key means (104) more accessible to the operator than if they were not so angled.

2. The keyboard as recited in claim 1 wherein said alphanumeric key means (102) include a plurality of keys arranged in a generally orthogonal, substantially concave array (108, 110).

3. The keyboard as recited in claim 1 or 2, further including palm rest means (136, 138) for receiving the palm, in normal use of the operator, said palm rest means (136, 138) being positioned, in normal use, higher than the reference position defined by said home keys, so that the fingers of the operator extend downward from said palm rest means (136, 138) during operation of the keyboard (100).

4. The keyboard as recited in claim 1, 2 or 3, further comprising an auxiliary key array (120, 122) including a plurality of auxiliary key means (106) for identifying auxiliary operations to be performed by the data processing device, said auxiliary key means including a plurality of auxiliary keys (106) arranged in a generally orthogonal array, (120, 122) said auxiliary key means (106) being positioned, in normal use, higher than the reference position defined by said home keys and rotated with respect to said alphanumeric key array (108, 110).

5. The keyboard as recited in claim 1, 2 or 3, further comprising:
an auxiliary key array (120, 122) including a plurality of auxiliary key means (106) constructed for manipulation by the thumbs of the operator for providing input to the data processing device, said auxiliary key means (106) being positioned, in normal use, higher than the reference position defined by said home keys and including an elongated key (124, 126) positioned at an angle with respect to a reference line, which is a line parallel to the longitudinal axis of the operator's index finger when the hands of the operator are positioned, in normal use, in the reference position, so that the thumb of the operator may be positioned along the surface of said elongated key (124, 126).

6. The keyboard as recited in claim 3 and 5 wherein said auxiliary key means (106) are positioned generally coplanar with said palm rest means (136, 138) so that the thumbs of the operator are generally coplanar with the palms of the operator during operation.

7. The keyboard as recited in claim 4, 5 or 6 wherein said plurality of auxiliary keys (106) include first and second keys (126, 124) positioned to be aligned along the thumb of the operator when the operators hands are in the reference position, said first and second keys (126, 124) being constructed to move between first and second positions remote from and proximate to the keyboard (100), respectively, said first key (126) being positioned so that, in normal use, its surface is higher than the surface of said second key (124) when said first key (126) is in said second position and said second key (124) is in said first position.

8. The keyboard according to claim 7, wherein said first and second keys are linear keys (126, 124).

9. The keyboard as recited in any one of claims 4 to 8 wherein said first and second alphanumeric key arrays (108, 110) are separated for manipulation by the left and right hands of the operator, respectively, said first and second function key arrays (116, 118) are separated for manipulation by the left and right hands of the operator, respectively, and wherein said auxiliary key array comprises first and second auxiliary key arrays (120, 122) separated for manipulation by the left and right hands of the operator, respectively.

## Patentansprüche

1. Eine Tastatur (100) zum Anpassen der Finger einer Hand einer Bedienungsperson an eine Datenverarbeitungseinrichtung, aufweisend:
eine erste alphanumerische Tastenanordnung (108) und eine zweite alphanumerische Tastenanordnung (110), wobei diese Tastenanordnungen (108, 110) seitlich voneinander beabstandet sind und jeweils eine Mehrzahl von alphanumerischen Tasteneinrichtungen (102) zum Identifizieren von alphanumerischen Zeichen bei der Datenverarbeitungseinrichtung aufweisen, wobei die genannten Tasteneinrichtungen (102) je eine Grundreihe (112, 114) mit Grundtasten aufweisen, auf denen bei der Anwendung die Finger einer Bedienungsperson normalerweise ruhen und welche eine Referenzposition für die Finger der Bedienungsperson definieren; und
eine erste Funktionstastenanordnung (116) und eine zweite Funktionstastenanordnung (118), wobei diese Funktionstastenanordnungen (116, 118) seitlich voneinander beabstandet sind und jeweils eine Mehrzahl von Funktionstasteneinrichtungen (104) zum Identifizieren von Funktionen aufweisen, die durch die Datenverarbeitungseinrichtung auszuführen sind, wobei die genannte Mehrzahl von Funktionstasteneinrichtungen (104) bei normaler Anwendung oberhalb des Niveaus der Referenzposition angehoben und in Richtung zu der Bedienungsperson unter einem Winkel geneigt ist, welcher größer ist als irgendein Winkel, unter welchem die Grundtasten in Richtung zur Bedienungsperson geneigt sind, wodurch die genannte Mehrzahl von Funktionstasteneinrichtungen (104) für die Bedienungsperson zugänglicher gemacht ist als sie es sein würde, wenn die Funktionstasteneinrichtungen (104) nicht so winklig angeordnet wären.

2. Die Tastatur, wie in Anspruch 1 angegeben, bei welcher die genannten alphanumerischen Tasteneinrichtungen (102) eine Mehrzahl von Tasten aufweisen, welche in einer im allgemeinen orthogonalen, im wesentlichen konkaven Anordnung (108, 110) angeordnet sind.

3. Die Tastatur, wie in Anspruch 1 oder 2 angegeben, ferner Handauflageeinrichtungen (136, 138) aufweisend, um bei normaler Anwendung die Handfläche der Bedienungsperson aufzunehmen, wobei die genannten Handauflageeinrichtungen (136, 138) bei normaler Anwendung höher als die Referenzposition positioniert sind, welche durch die genannten Grundtasten definiert ist, so daß die Finger der Bedienungsperson sich von den genannten Handauflageeinrichtungen (136, 138) während der Bedienung der Tastatur (100) nach abwärts erstrecken.

4. Die Tastatur, wie in Anspruch 1, 2 oder 3 angegeben, ferner eine Hilfstastaturanordnung (120, 122) aufweisend, welche eine Mehrzahl von Hilfstasteneinrichtungen (106) zum Identifizieren von Hilfsoperationen aufweist, die durch die Datenverarbeitungseinrichtung auszuführen sind, wobei die genannten Hilfstasteneinrichtungen eine Mehrzahl von Hilfstasten (106) aufweisen, die in einer im allgemeinen orthogonalen Anordnung (120, 122) angeordnet sind, und wobei die genannten Hilfstasteneinrichtungen (106) bei normaler Anwendung höher als die Referenzposition positioniert, die durch die genannten Grundtasten definiert ist, und in Bezug auf die genannte alphanumerische Tastenanordnung (108, 110) gedreht sind.

5. Die Tastatur, wie in Anspruch 1, 2 oder 3 angegeben, ferner aufweisend:
eine Hilfstastenanordnung (120, 122), welche eine Mehrzahl von Hilfstasteneinrichtungen (106) aufweist, welche zur Manipulation durch die Daumen der Bedienungsperson ausgebildet sind, um einen Eingang zu der Datenverarbeitungseinrichtung zu ergeben, wobei die genannten Hilfstasteneinrichtungen (106) bei normaler Anwendung höher als die Referenzposition positioniert sind, welche durch die genannten Grundtasten definiert ist, und wobei die genannten Hilfstasteneinrichtungen (106) jeweils eine längliche Taste (124, 126) aufweisen, die unter einem Winkel in Bezug auf eine Referenzlinie positioniert ist, welches eine Linie parallel zu der Längsachse des Indexfingers der Bedienungsperson ist, wenn die Hände der Bedienungsperson bei normaler Anwendung in der Referenzposition positioniert sind, so daß der Daumen der Bedienungsperson entlang der Oberfläche der jeweiligen länglichen Taste (124, 126) positioniert werden kann.

6. Die Tastatur, wie in Anspruch 3 und 5 angegeben, bei welcher die genannten Hilfstasteneinrichtungen (106) im wesentlichen koplanar mit den genannten Handauflageeinrichtungen (136, 138) positioniert sind, so daß die Daumen der Bedienungsperson im wesentlichen koplanar mit den Handflächen der Bedienungsperson während der Bedienung sind.

7. Die Tastatur, wie in Anspruch 4, 5 oder 6 angegeben, bei welcher die genannte Mehrzahl von Hilfstasten (106) eine jeweilige erste Taste (126) und eine jeweilige zweite Taste (124) aufweist, wobei diese Tasten (126, 124) positioniert sind, um entlang des Daumens der Bedienungsperson ausgerichtet zu sein, wenn die Hände der Bedienungsperson in der Referenzposition sind, wobei die jeweilige erste Taste (126) und die jeweilige zweite Taste (124) so ausgebildet sind, um sich zwischen einer jeweiligen ersten Position entfernt von der Tastatur (100) und einer jeweiligen zweiten Position nahe zu der Tastatur (100) zu bewegen, und wobei die jeweilige erste Taste (126) so positioniert ist, daß bei normaler Anwendung ihre Oberfläche höher ist als die Oberfläche der jeweiligen zweiten Taste (124), wenn die jeweilige erste Taste (126) in der genannten zweiten Position ist und die jeweilige zweite Taste (124) in der genannten ersten Position ist.

8. Die Tastatur nach Anspruch 7, bei welcher die genannten ersten Tasten und die genannten zweiten Tasten jeweils lineare Tasten (126, 124) sind.

9. Die Tastatur, wie in einem der Ansprüche 4 bis 8 angegeben, bei welcher die genannte erste alphanumerische Tastenanordnung (108) und die genannte zweite alphanumerische Tastenanordnung (110) für eine Manipulation durch die linke Hand und die rechte Hand der Bedienungsperson getrennt sind, die genannte erste Funktionstastenanordnung (116) und die genannte zweite Funktionstastenanordnung (118) für eine Manipulation durch die linke Hand und die rechte Hand der Bedienungsperson getrennt sind und bei welcher die genannte Hilfstastenanordnung eine erste Hilfstastenanordnung (120) und eine zweite Hilfstastenanordnung (122) aufweist, wobei diese Hilfstastenanordnungen für eine Manipulation durch die linke Hand und durch die rechte Hand der Bedienungsperson getrennt sind.

## Revendications

1. Clavier (100) pour établir une interface entre les doigts de la main d'un opérateur et un dispositif de traitement, comprenant:
des premier et deuxième pavés (108, 110) de touches alphanumériques, espacés latéralement l'un de l'autre et comportant une pluralité de moyens (102) formant touches alphanumériques, destinés à fournir l'identité de caractères alphanumériques au dispositif de traitement de données, lesdites moyens (102), formant touches, comprenant une rangée médiane (112, 114) qui comporte des touches médianes où reposent normalement les doigts de l'opérateur pendant l'utilisation et qui définissent une position de référence pour les doigts de l'opérateur; et
des premier et deuxième pavés (116, 118) de touches de fonctions, qui sont espacés l'un de l'autre et qui comportent une pluralité de moyens (104) formant touches de fonctions, destinés à identifier des fonctions devant être exécutées par le dispositif de traitement de données, ladite pluralité de moyens (104) formant touches de fonction se trouvant, pendant une utilisation normale, à un niveau situé au-dessus du niveau de la position de référence et s'inclinant vers l'opérateur suivant un angle qui est plus grand que l'angle dont les touches médianes sont inclinées vers l'opérateur, en rendant ainsi ladite pluralité de moyens (104) formant touches de fonctions plus accessibles à l'opérateur que si ces moyens n'étaient pas inclinés de cette façon.

2. Clavier selon la revendication 1, dans lequel ledit moyen (102) formant touches alphanumériques comprend une pluralité de touches disposées sous la forme d'un pavé (108, 110), globalement orthogonal et sensiblement concave.

3. Clavier selon la revendication 1 ou 2, comprenant en outre des moyens (136, 138) formant repose-paume, destinés à recevoir, pendant une utilisation normale, la paume des mains de l'opérateur, lesdits moyens (136, 138) formant repose-paume se trouvant, pendant une utilisation normale, dans une position plus élevée que la position de référence définie par lesdites touches médianes, de sorte que les doigts de l'opérateur s'étendent vers le bas depuis lesdits moyens (136, 138) formant repose-paume, pendant l'actionnement du clavier (100).

4. Clavier selon la revendication 1, 2 ou 3, comprenant, en outre, un pavé (120, 122 ) de touches auxiliaires comprenant une pluralité de moyens (106) formant touches auxiliaires, destinés à identifier des opérations auxiliaires devant être exécutées par le dispositif de traitement de données, lesdits moyens formant touches auxiliaires comprenant une pluralité de touches auxiliaires (106) disposées sous la forme d'un pavé globalement orthogonal (120, 122), lesdits moyens (106) formant touches auxiliaires se trouvant, pendant une utilisation normale, dans une position plus élevée que la position de référence définie par lesdites touches médianes et étant décalés en rotation par rapport audit pavé (108, 110) de touches alphanumériques.

5. Clavier selon la revendication ,; 2 ou 3, comprenant, en outre, :
un pavé (120, 122) de touches auxiliaires comprenant une pluralité de moyens (106) formant touches auxiliaires, réalisés en vue d'une manipulation par les pouces de l'opérateur pour fournir des informations d'entrée au dispositif de traitement de données, lesdits moyens (106) formant touches auxiliaires se trouvant, pendant une utilisation normale, dans une position plus élevée que la position de référence définie par lesdites touches médianes et comprenant une touche allongée (124, 126) faisant un angle par rapport à une ligne de référence qui est une ligne parallèle à l'axe longitudinal de l'index de l'opérateur quand les mains de l'opérateur se trouvent, pendant une utilisation normale, dans la position de référence, de manière que le pouce de l'opérateur pusse être positionné le long de la surface de ladite touche allongée (124, 126).

6. Clavier selon la revendication 3 et 5, dans lequel lesdits moyens (106) formant touches auxiliaires se trouvent globalement dans le même plan que les moyens (136, 138) formant repose-paume de manière que les pouces de l'opérateur se trouvent globalement dans le même plan que les paumes de l'opérateur pendant une opération de frappe.

7. Clavier selon la revendication 4, 5 ou 6, dans lequel ladite pluralité de touches auxiliaires (106) comprend des première et deuxième touches (126, 124) positionnées de manière à être alignées le long du pouce de l'opérateur quand les mains de l'opérateurs se trouvent dans la position de référence, lesdites première et deuxième touches (126, 124) étant réalisées de manière à se déplacer entre des première et deuxième positions, éloignée et proche du clavier (100), respectivement, ladite première touche (126) étant positionnée de manière que, pendant une utilisation normale, sa surface soit plus haute que la surface de ladite deuxième touche (124) quand ladite première touche (126) se trouve dans ladite deuxième position et ladite deuxième touche (124) se trouve dans ladite première position.

8. Clavier selon la revendication 7, dans lequel lesdites première et deuxième touches sont des touches linéaires (126, 124).

9. Clavier selon l'une quelconque des revendications 4 à 8, dans lequel lesdits premier et deuxième pavés (108, 110) de touches alphanumériques sont séparés en vue d'une manipulation par les mains gauche et droite de l'opérateur, respectivement, lesdits premier et deuxième pavés (116, 118) de touches de fonctions sont séparés en vue d'une manipulation par les mains gauche et droite de l'opérateur, respectivement, et dans lequel ledit pavé de touches auxiliaires comprend des premier et deuxième pavés (120, 122) de touches auxiliaires séparés en vue d'une manipulation par les mains gauche et droite de l'opérateur, respectivement.
